# EUROPÄISCHE PATENTANMELDUNG

(11) **EP 0 618 656 A1**
(43) Veröffentlichungstag der Anmeldung: **05.10.1994**
(21) Anmeldenummer: 94102394.7
(22) Anmeldetag: 17.02.1994
(51) Int. Cl.: H02G 3/22

(54) **Vorrichtung zur Durchführung von Kabeln**

(30) Priorität: 27.03.1993 DE 4310117
(71) Anmelder: Heidelberger Druckmaschinen Aktiengesellschaft, D-69115 Heidelberg (DE)
(72) Erfinder: Becker, Armin, D-76669 Bad Schönborn 2 (DE); Wiedewilt, Martina, D-68789 St. Leon-Rot (DE)
(74) Vertreter: Stoltenberg, Heinz-Herbert Baldo

(57) **Zusammenfassung**

Die Erfindung betrifft eine Vorrichtung zur Durchführung von Kabeln durch eine öffnung (3) einer Wandung (2) eines Gehäuses. Bei der Wandung (2) handelt es sich vorzugsweise um die Rückwand eines Schaltschrankes.

Der Erfindung liegt die Aufgabe zugrunde eine Vorrichtung zu schaffen, die zur Durchführung von Kabeln unterschiedlichster Dicke geeignet ist.

Die Aufgabe wird dadurch gelöst, daß mindestens zwei Lagen eines kompressiblen Materials (4) vorgesehen sind, zwischen denen die Kabel (5) durchgeführt sind und daß eine Haltevorrichtung (6) vorgesehen ist, über die ein Druck auf die Lagen des kompressiblen Materials (4) und die zwischen ihm laufenden Kabel (5) ausgeübt wird.

## Beschreibung

Die Erfindung bezieht sich auf eine Vorrichtung zur Durchführung von Kabeln durch eine Öffnung einer Wandung eines Gehäuses.

Es sind Kabeldurchführungen durch Wandungen bekannt, bei denen eine Aussparung in die Wandung eingebracht ist, die der Größe des Kabels entspricht und die erforderlichenfalls eine Dichtung aufweist, um Dichtigkeit gegen Staub und Spritzwasser zu erzielen. Bei solchen Kabeldurchführungen muß bei der Montage der Stecker Vom Kabel abgenommen, das Kabel durch die öffnung hindurchgeführt und danach der Stecker wieder anmontiert werden. Größe und Anzahl der öffnungen müssen entsprechend den verwendeten Kabeln vorgesehen sein. Die Nachteile einer derartigen Kabeldurchfuhrung liegen auf der Hand.

Aus der DE 38 16 870 A1 ist eine Einrichtung zur Durchführung von Kabeln bekannt geworden, mit welcher ein Kabel ebenfalls staub- und schmutzwassergeschützt durch Gehäuseöffnungen geführt werden kann. Pro durchzuführendem Kabel ist hierbei ein quaderförmiger Block aus aufgeschäumten Kunststoff vorgesehen, welcher eine Längsbohrung enthält, in die das Kabel über einen Längsschlitz seitlich eingeführt wird. Dieser Block wird zwischen zwei doppel-T-förmig ausgebildeten Elementen fixiert. Durch eine entsprechende Wahl des Bohrungsdurchmessers in bezug zum Kabelaußendurchmesser wird eine sichere Zugentlastung erreicht. Mit dieser Ausführung wird die umständliche Einführung der Kabel durch die Gehäuseöffnung umgangen. Da jedoch für jedes Kabel ein gesonderter Block vorgesehen ist, ist auch diese Kabeldurchführung noch relativ aufwendig.

Eine weitere Vorrichtung zur Durchführung von Kabeln wird in der DE 40 40 379 A1 vorgeschlagen. Die Wandung, durch die die Kabel - insbesondere Flachkabel - geführt werden, weist eine rechteckige öffnung auf. Die rechteckige öffnung ist mittels mindestens eines arretierbaren Schiebers beliebig verkleinerbar. Die Lippen des Schiebers sind aus elastischem Material gefertigt. Die Kabel werden zwischen diesen elastischen Lippen eingeklemmt, wodurch eine Zugentlastung der Kabel erzielt wird.
Solange es sich bei den Kabeln um Kabel gleicher Dicke handelt, ist die in der DE 40 40 379 A1 beschriebene Kabeldurchführung sehr gut einsetzbar. Insbesondere gilt dies für den Einsatz bei Flachbandkabeln. Sobald jedoch Flachbandkabel mit Rundkabeln kombiniert werden, muß zusätzlich ein zweiter um 90° versetzter Schieber verwendet werden. Auch kann eine Zugentlastung nicht mehr in jedem Fall garantiert werden, da die Verstellung des Schiebers nicht stufenlos möglich ist.

Der vorliegenden Erfindung liegt die Aufgabe zugrunde, eine flexible und kostengünstige Vorrichtung zur Kabeldurchführung durch die Wandung eines Gehäuses vorzuschlagen.

Die Aufgabe wird durch den kennzeichnenden Teil des Hauptanspruches gelöst.

Gemäß einer vorteilhaften Weiterbildung der erfindungsgemäßen Vorrichtung ist vorgesehen, daß es sich bei dem kompressiblen Material um Schaumstoff handelt. Schaumstoff ist einerseits sehr kostengünstig und besitzt darüber hinaus auch die geforderte hohe Kompressibilität, mit der es in jede beliebige Form hineingepreßt und an jede beliebige Form angepaßt werden kann.

Vorteilhafterweise ist die Haltevorrichtung im Inneren des Gehäuses angeordnet. Darüber hinaus sind sowohl die Haltevorrichtung als auch die Lage des kompressiblen Materials so dimensioniert, daß zumindest die öffnung in der Wandung abgedeckt ist. Hierdurch wird sichergestellt, daß durch die öffnung weder Spritzwasser noch Staub in das Gehäuse eindringen können.

Besonders vorteilhaft ist die folgende Ausgestaltung der Haltevorrichtung:
Sie besteht aus einem quer zur Laufrichtung der Kabel offenen Rahmen, wobei ein zumindest zu den Lagen des kompressiblen Materials paralleles Seitenteil in jeder beliebigen Position arretierbar ist. Hierdurch wird erreicht, daß die Lagen des kompressiblen Materials in eine gewünschte Form gepreßt werden, so daß stets sichergestellt wird, daß alle Kabel zugentlastet sind. Diese Ausgestaltung ist besonders vorteilhaft, wenn Kabel unterschiedlicher Dicke zwischen den Lagen des kompressiblen Materials fixiert werden sollen.

Gemäß einer vorteilhaften, kostengünstigen Konstruktion der Haltevorrichtung ist vorgesehen, daß diese aus zwei ersten Halteelementen besteht, die fest mit dem Gehäuse verbunden sind, und daß im Seitenbereich des beweglich angeordneten Seitenteils zweite Halteelemente vorgesehen sind, die mit den festsitzenden ersten Halteelementen über Befestigungsmittel verbunden werden. Wählt man als Befestigungsmittel Schrauben mit Schnellverschlußmuttern, so läßt sich eine exakte Positionierung des Seitenteils der Haltevorrichtung in kürzester Zeit erreichen.

Gemäß einer Ausgestaltung der erfindungsgemäßen Vorrichtung ist vorgesehen, daß es sich bei der Wandung des Gehäuses um die Rückwand eines Schaltschrankes handelt. Generell kann die Erfindung jedoch überall dort zum Einsatz kommen, wo Kabel durch öffnungen in Gehäusen geführt werden.

Die Erfindung wird anhand der nachfolgenden Zeichnungen näher erläutert.

Es zeigt:
- Fig. 1: einen Längsschnitt durch eine Ausführungsform der erfindungsgemäßen Vorrichtung
und
- Fig. 2: einen Querschnitt durch eine Ausführungsform der erfindungsgemäßen Vorrichtung.

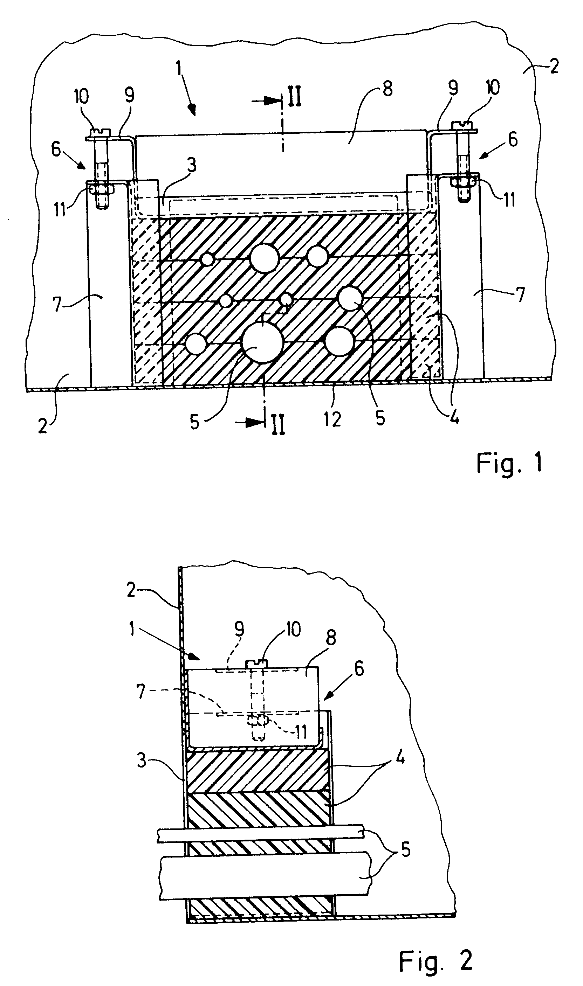

In Fig. 1 ist ein Längsschnitt einer Ausführungsform der erfindungsgemäßen Vorrichtung 1 zur Durchführung von Kabeln 5 durch eine öffnung 3 in einer Wandung 2 eines Gehäuses dargestellt. Die erfindungsgemäße Vorrichtung 1, die aus einer Haltevorrichtung 6 und mehreren Lagen eines kompressiblen Materials 4 besteht, ist im Inneren des Gehäuses angeordnet. Sie ist so dimensioniert, daß sie zumindest die öffnung 3 in der Wandung 2 des Gehäuses abdeckt.

Die Haltevorrichtung 6 besteht aus zwei Winkelelementen 7, die fest mit der Unterseite 12 des Gehäuses verbunden sind, und aus einem Deckel 8. In dem Rahmen sind die einzelnen Lagen eines kompressiblen Materials 4 angeordnet. Zwischen den einzelnen Lagen des kompressiblen Materials 4 werden die Kabel 5 durch die öffnung 3 der Wandung 2 des Gehäuses geführt. Bei den Kabeln handelt es sich vorzugsweise um Flachband- und Rundbandkabel, die gleichzeitig über die erfindungsgemäße Vorrichtung fixiert werden.

Der Deckel 8, d. h. das obere Seitenteil 8, der Haltevorrichtung 6 ist stufenlos in der Höhe verstellbar. Hierzu sind zwei Winkelstücke 9 vorgesehen, die in den Seitenbereichen des Deckels 8 angeordnet sind und die mit den feststehenden Winkelelementen 7 über Schrauben 10 verbunden sind. Die stufenlose Verstellung des Deckels 8 bezüglich der Lagen des kompressiblen Materials 4 erfolgt über ein entsprechendes Anziehen der Schrauben 10. Je nach Anzugsmoment der Schrauben 10 wird auf das kompressible Material 4 und damit auf die Kabel 5 ein Druck ausgeübt, wodurch eine gewisse Zugentlastung der Kabel 5 erreicht wird.

Fig. 2 zeigt den Querschnitt der erfindungsgemäßen Vorrichtung 1 gemäß Fig. 1.

### BEZUGSZEICHENLISTE

- 1: Vorrichtung zur Kabeldurchführung
- 2: Wandung eines Gehäuses
- 3: öffnung in Wandung
- 4: kompressibles Material
- 5: Kabel
- 6: Haltevorrichtung
- 7: Winkelelement
- 8: Deckel
- 9: Winkelstück
- 10: Schraube
- 11: Schnellverschlußmutter
- 12: Unterseite des Gehäuses

## Patentansprüche

1. Vorrichtung zur Durchführung von Kabeln durch eine öffnung in einer Wandung eines Gehäuses,
**dadurch gekennzeichnet**,
daß mindestens zwei Lagen eines kompressiblen Materials (4) vorgesehen sind, zwischen denen die Kabel (5) durchgeführt sind, und
daß eine Haltevorrichtung (6) vorgesehen ist, über die ein Druck auf die Lagen des kompressiblen Materials (4) und die zwischen ihnen verlaufenden Kabel (5) ausgeübt wird.

2. Vorrichtung nach Anspruch 1,
**dadurch gekennzeichnet**,
daß es sich bei dem kompressiblen Material (4) um Schaumstoff handelt.

3. Vorrichtung nach Anspruch 1,
**dadurch gekennzeichnet**,
daß die Haltevorrichtung (6) im Inneren des Gehäuses angeordnet ist.

4. Vorrichtung nach Anspruch 3,
**dadurch gekennzeichnet**,
daß die Haltevorrichtung (6) und die Lagen des kompressiblen Materials (4) so dimensioniert sind, daß zumindest die öffnung (3) in der Wandung (2) des Gehäuses abgedeckt ist.

5. Vorrichtung nach Anspruch 1,
**dadurch gekennzeichnet,**
daß die Haltevorrichtung (6) aus einem quer zur Laufrichtung der Kabel (5) offenen Rahmen besteht, wobei zumindest eine der zu den Lagen des kompressiblen Materials (4) parallelen Seitenteile (8) des Rahmens in beliebigen Positionen arretierbar ist.

6. Vorrichtung nach Anspruch 1 oder 5,
**dadurch gekennzeichnet**,
daß die Haltevorrichtung (6) aus mindestens zwei Halteelementen (7) besteht, die fest mit dem Gehäuse verbunden sind,
daß in den Seitenbereichen des beweglich angeordneten Seitenteils (8) zweite Halteelemente (9) angeordnet sind und
daß die ersten Halteelemente (9) mit den zweiten Halteelementen (7) über Verbindungselemente (10) verbunden sind.

7. Vorrichtung nach Anspruch 1,
**dadurch gekennzeichnet**,
daß es sich bei der Wandung (2) des Gehäuses um die Rückwand eines Schaltschrankes handelt.
